# EUROPEAN PATENT APPLICATION

(11) **EP 4 160 405 A1**
(43) Date of publication of application: **05.04.2023**
(21) Application number: 21825322.7
(22) Date of filing: 31.05.2021
(51) Int. Cl.: G06F 9/48

(54) **TASK EXECUTION METHOD AND STORAGE DEVICE**

(30) Priority: 19.06.2020 CN 202010564326
(71) Applicant: Huawei Technologies Co., Ltd., Longgang District, Shenzhen, Guangdong 518129 (CN)
(72) Inventor: ZHONG, Kan, Shenzhen, Guangdong 518129 (CN); CUI, Wenlin, Shenzhen, Guangdong 518129 (CN)
(74) Representative: Epping - Hermann - Fischer
(86) International application number: PCT/CN2021/097449
(87) International publication number: WO 2021/254135

(57) **Abstract**

A task execution method and a storage device are provided, and pertain to the field of computer technologies. A method for collaboratively processing data by using a plurality of types of processors in a storage device is provided. A central processing unit in the storage device divides a data processing task into a plurality of subtasks, and allocates the subtasks to dedicated processors in the storage device based on attributes of the subtasks. In one aspect, during data processing, the central processing unit is responsible for task decomposition and task scheduling, and the dedicated processors are responsible for executing the subtasks, so that both computing power of the central processing unit and computing power of the dedicated processors are fully utilized. In another aspect, an attribute of a subtask is considered when the subtask is allocated, so that the subtask can be scheduled, based on the attribute of the subtask, to a proper dedicated processor for execution. Therefore, according to the method, data processing efficiency is improved.

## Description

### TECHNICAL FIELD

This application relates to the field of computer technologies, and in particular, to a task execution method and a storage device.

### BACKGROUND

Near data processing (Near Data Processing, NDP) is a data processing method or concept. The NDP aims to perform data processing and computing at a place close to data, to reduce or even avoid data movement as much as possible. Accordingly, a performance bottleneck caused by data movement overheads is avoided, and efficiency of executing a data processing task is improved.

When the NDP is implemented in a related technology, a database server notifies, by using the intelligent database protocol (the Intelligent Database protocol, an iDB protocol, a query push-down protocol), a storage device of a to-be-executed table query operation and a location of data. The storage device uses, based on information included in the iDB protocol, a central processing unit (central processing unit, CPU) to perform table query operations, such as predicate filtering, column filtering, and connection filtering, that are in a structured query language (Structured Query Language, SQL for short) query.

When the foregoing method is used, only computing power of the CPU in the storage device is used. Consequently, data processing efficiency is affected.

### SUMMARY

Embodiments of this application provide a task execution method and a storage device, to improve data processing efficiency. The technical solution is as follows:
According to a first aspect, a task execution method is provided. The method is applied to a storage device, and the storage device includes a central processing unit and a plurality of dedicated processors. In the method, the central processing unit obtains a data processing task; the central processing unit divides the data processing task into a plurality of subtasks; and the central processing unit allocates a first subtask in the plurality of subtasks to a first dedicated processor based on attributes of the subtasks. The first dedicated processor is one of the plurality of dedicated processors.

The foregoing provides a method for collaboratively processing data by using a plurality of types of processors in a storage device. A central processing unit in the storage device divides a data processing task into a plurality of subtasks, and allocates the subtasks to dedicated processors in the storage device based on attributes of the subtasks. In one aspect, during data processing, the central processing unit is responsible for task decomposition and task scheduling, and the dedicated processors are responsible for executing the subtasks, so that both computing power of the central processing unit and computing power of the dedicated processors are fully utilized. In another aspect, an attribute of a subtask is considered when the subtask is allocated, so that the subtask can be scheduled, based on the attribute of the subtask, to a proper dedicated processor for execution. Therefore, according to the method, data processing efficiency is improved.

Optionally, the attribute of the subtask includes an address of data in the subtask, and the first dedicated processor is a dedicated processor closest to the data.

In this optional manner, the subtask is scheduled to a dedicated processor closest to the data for execution. A transmission path of data from a storage medium to a dedicated processor is shortened, so that the dedicated processor can access the data and process the data nearby. Therefore, a delay and performance overheads caused by data movement are reduced, and data processing efficiency and a data processing speed are improved.

Optionally, the attribute of the subtask includes a computing mode and/or a concurrency amount of the subtask, and the first dedicated processor is a dedicated processor matching the computing mode and/or the concurrency amount. Different dedicated processors are good at processing different tasks. Therefore, in this optional manner, whether a computing feature of a subtask matches a dedicated processor is considered, and the subtask is scheduled to a dedicated processor matching the computing feature of the subtask for execution, so that the dedicated processor can process a task that the dedicated processor is good at processing. In this way, a performance advantage of the dedicated processor is utilized, and data processing efficiency is improved.

Optionally, the attribute of the subtask includes definition information of the subtask, and the first dedicated processor is a dedicated processor indicated by definition information of the first subtask.

In this optional manner, in one aspect, a developer can specify, in definition information, a processor that executes a subtask, so that the subtask is scheduled to a dedicated processor specified by the developer for execution, and a customization requirement of the developer is met. In another aspect, as computing power of a storage device increases and service requirements increase, when a new task needs to be executed on the storage device, an identifier of a dedicated processor is added to definition information of the new task, so that a dedicated processor to which the new task is scheduled can be indicated. In this way, difficulty in scheduling the new task is reduced, and scalability is improved.

Optionally, the attribute of the subtask includes a dataset type corresponding to the subtask, and the first dedicated processor is a dedicated processor matching a dataset type corresponding to the first subtask.

Different dedicated processors are suitable for processing different types of data. For example, a GPU is suitable for processing an image, and some dedicated codec processors are suitable for processing videos. Therefore, in this optional manner, whether a type of to-be-processed data in a subtask matches a dedicated processor is considered, and the subtask is scheduled to a dedicated processor matching a dataset type of the subtask for execution, so that the dedicated processor can process data that is suitable for the dedicated processor to process. In this way, a case in which task execution fails because the dedicated processor cannot identify and process data of a specific type is avoided, and a success rate of task execution is improved.

Optionally, an execution sequence of the plurality of subtasks is recorded in a topology diagram, and the method further includes the following:
The central processing unit indicates, based on the topology diagram, the first dedicated processor to sequentially execute the first subtask.

In this optional manner, in one aspect, because the topology diagram records an execution sequence of the subtasks, the central processing unit does not need to recalculate the execution sequence of the subtasks, and can directly perform scheduling according to the execution sequence recorded in the topology diagram, so that a scheduling workload is reduced. In another aspect, currently, there are many topology-based scheduling optimization algorithms, and a topology-based scheduling optimization algorithm can be invoked to optimize a subtask scheduling sequence, so that an overall execution time period of a task is shortened.

According to a second aspect, a storage device is provided. The storage device includes a central processing unit and a plurality of dedicated processors. The storage device provided in the second aspect is configured to implement the function provided in the first aspect or any one of the optional manners of the first aspect. For specific details, refer to the first aspect or any one of the optional manners of the first aspect.

According to a third aspect, a computer-readable storage medium is provided. The storage medium stores at least one instruction, and the at least one instruction is read by a central processing unit, so that a storage device is enabled to perform the task execution method provided in the first aspect or any one of the optional manners of the first aspect. According to a fourth aspect, a computer program product is provided. When the computer program product runs on a storage device, the storage device is enabled to perform the task execution method provided in the first aspect or any one of the optional manners of the first aspect.

According to a fifth aspect, a storage device is provided. The storage device has a function of implementing the first aspect or any one of the optional manners of the first aspect. The storage device includes at least one module, and the at least one module is configured to implement the task execution method provided in the first aspect or any one of the optional manners of the first aspect. For specific details of the storage device provided in the fifth aspect, refer to the first aspect or any one of the optional manners of the first aspect. Details are not described herein again.

### BRIEF DESCRIPTION OF DRAWINGS

FIG. 1 is a schematic diagram of a system architecture according to an embodiment of this application;
FIG. 2 is a schematic diagram of application data distribution according to an embodiment of this application;
FIG. 3 is a schematic diagram of another system architecture according to an embodiment of this application;
FIG. 4 is a flowchart of a task execution method according to an embodiment of this application;
FIG. 5 is a schematic diagram of a topology diagram according to an embodiment of this application;
FIG. 6 is a flowchart of another task execution method according to an embodiment of this application; and
FIG. 7 is a schematic diagram of a structure of a task execution apparatus according to an embodiment of this application.

### DESCRIPTION OF EMBODIMENTS

To make the objectives, technical solutions, and advantages of this application clearer, the following further describes the implementations of this application in detail with reference to the accompanying drawings.

Because some embodiments of this application relate to application of a near data processing technology, for ease of understanding, the near data processing technology is first briefly described below.

In a conventional data processing architecture, data processing is generally centralized. To be specific, data is loaded from a storage to a memory through an input/output (Input/Output, IO) or a network, and then a central processing unit (central processing unit, CPU) processes the data in the memory. However, in a big data era, an amount of to-be-processed data increases explosively. In this conventional data processing architecture, a large amount of data needs to be transmitted. For a data-intensive application such as a database, to perform query processing, a large quantity of IO operations are required, to load data to memories of computing nodes. As a result, an IO or a network becomes a performance bottleneck of a system, and the following serious performance problems are caused. (1) Movement of a large amount of data increases a data processing delay. (2) Data transmission causes IO or network resource competition, affects access to other application data in the system, and affects performance of another application. In the big data era, an amount of data increases explosively. For a data analysis application, data transmission should be avoided as much as possible, to reduce data movement overheads.

In addition, after data is loaded from an external memory to a dynamic random access memory (Dynamic Random Access Memory, DRAM), a CPU needs to access a memory by using load/store (load/store) instructions through a memory bus. CPU performance increases at a speed of about 60% every year, and memory performance increases at a speed of only about 7%. As a result, a current memory speed lags far behind a CPU speed, and there is a great performance gap between the memory and the CPU. Accordingly, it is difficult to fully utilize CPU advantages, and a memory system becomes a performance bottleneck of a computing system. Especially in a memory-intensive (Memory Intensive) high-performance computing (High Performance Computing, HPC) scenario, a memory speed greatly limits system performance. In addition, the memory bus between the memory and the CPU faces problems such as low bandwidth and a high delay. Data transmission has high costs, and the performance of the computing system are greatly affected. The memory bottleneck that limits the system performance is generally called a "memory wall (Memory Wall) ".

To resolve a performance bottleneck caused by data movement overheads, a conventional processor-centric computing mode needs to be changed to a data-centric computing mode. Data processing is performed at a place close to data, to implement near data processing (Near Data Processing, NDP). NDP, also referred to as near data computing (Near Data Computing, NDC), is a data processing method or concept. The NDP refers to performing data processing and computing at a place close to data, to reduce or even avoid data movement as much as possible and improve data processing efficiency.

The following describes an application scenario provided in embodiments of this application.

The method provided in this embodiment can be applied to a distributed storage system or a centralized storage device. The following separately describes the two application scenarios.

Application scenario 1: A scenario of a distributed storage system.

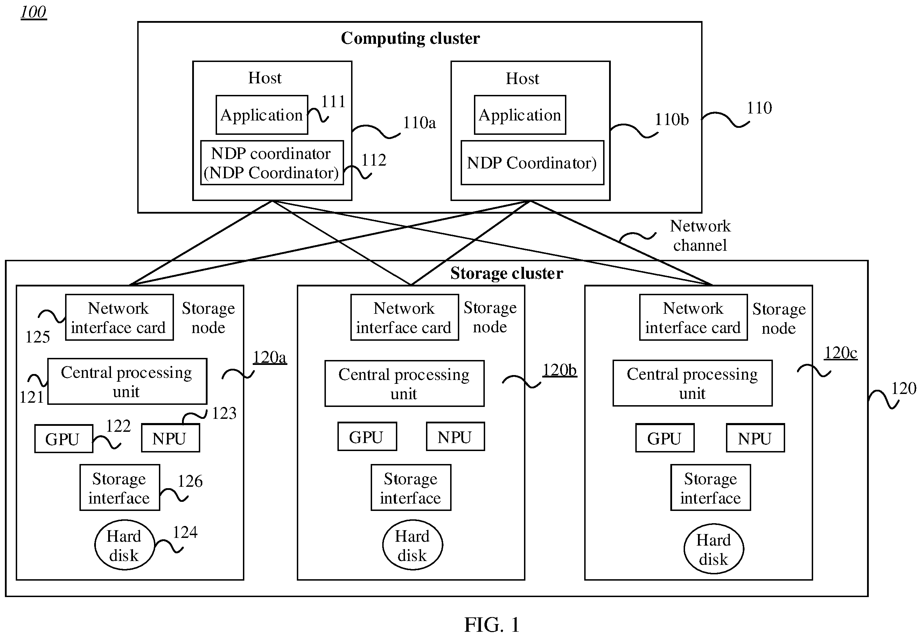

As shown in FIG. 1, this embodiment provides a system architecture 100. The system architecture 100 is an example for the application scenario of a distributed storage system. The system architecture 100 is an architecture in which computing and storage are separated. The system architecture 100 includes a computing cluster 110 and a storage cluster 120. The computing cluster 110 and the storage cluster 120 are connected through a network channel.

The computing cluster 110 includes a plurality of computing nodes (computing nodes, CNs). A form of the computing node includes a plurality of cases. For example, the computing node is a host, a server, a personal computer, or another device having a computing processing capability. For example, as shown in FIG. 1, the computing cluster 110 includes a host 110a and a host 110b. Different computing nodes in the computing cluster 110 are connected to each other through a wired network or a wireless network. The different computing nodes in the computing cluster 110 may be distributed at different locations or a same location. The computing node is used to generate and deliver a data processing task.

The computing node includes at least one application (Application) 111 and an NDP coordinator (NDP Coordinator) 112. The application 111 and the NDP coordinator 112 are software on the computing node. The application 111 is used to generate a data processing task. Optionally, the application 111 is a data-intensive application, that is, an application in which a massive amount of data needs to be processed. For example, the application 111 is an online analytical processing (Online Analytical Processing, OLAP) application, an artificial intelligence (artificial intelligence, AI) application, an online transaction processing (Online Transaction Processing, OLTP) application, a big data analysis application, an HPC application, or the like. For example, the OLAP application is used to provide a multi-table union query service in an OLAP system. The application 111 sends the generated data processing task to the NDP coordinator 112. The NDP coordinator 112 is configured to send the data processing task generated by the application 111 to each storage node in which data is located.

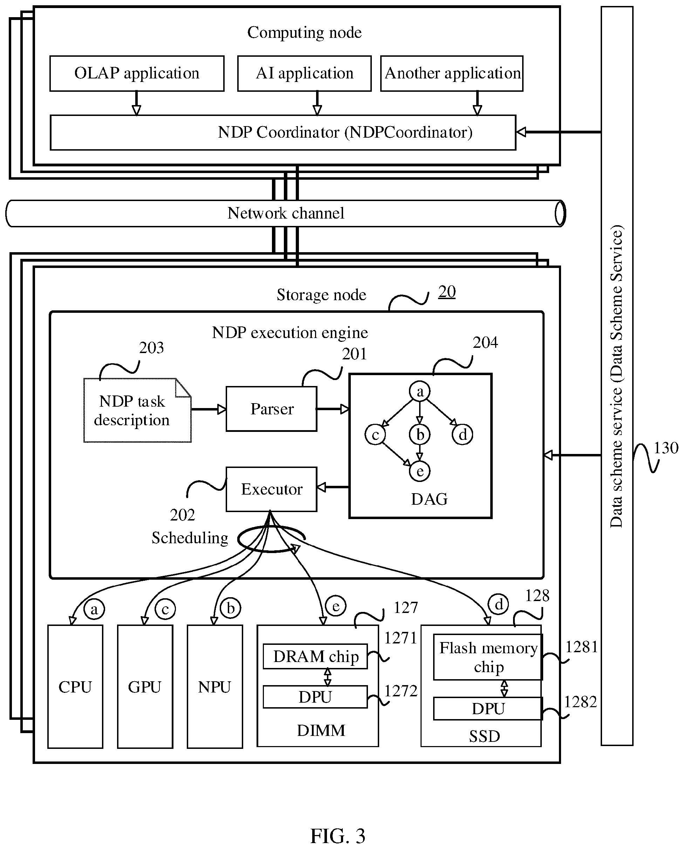

Optionally, the distributed storage system further includes a data management apparatus. The data management apparatus is configured to record a storage node in which data is located in the storage cluster 120. The NDP coordinator in the computing node is configured to send a query request to the data management apparatus, to find a storage node in which the data is located. Optionally, when the data is a file, the data management apparatus stores a mapping relationship between a file identifier (identifier, ID) and an ID of a storage node in which the file is located. Optionally, when the data is a key-value pair, the data management apparatus stores a mapping relationship between a key and an ID of a storage node in which the file is located. For example, as shown in FIG. 3, the data management apparatus is a data scheme service (Data Scheme Service) 130 in FIG. 3.

The storage cluster 120 includes a plurality of storage nodes (Date Node, DN). For example, as shown in FIG. 1, the storage cluster 120 includes a storage node 120a, a storage node 120b, and a storage node 120c. Different storage nodes in the storage cluster 120 may be distributed at different locations or a same location. The different storage nodes in the storage cluster 120 are interconnected through a high-speed network. The storage node is configured to store data. The storage node may carry a storage service of an application on the computing node, and respond to an IO request from the computing node.

The network channel between the computing cluster 110 and the storage cluster 120 is established by using at least one network device. The network device is configured to forward data transmitted between the computing cluster 110 and the storage cluster 120. The network device includes but is not limited to a switch, a router, and the like. The network device is not shown in FIG. 1.

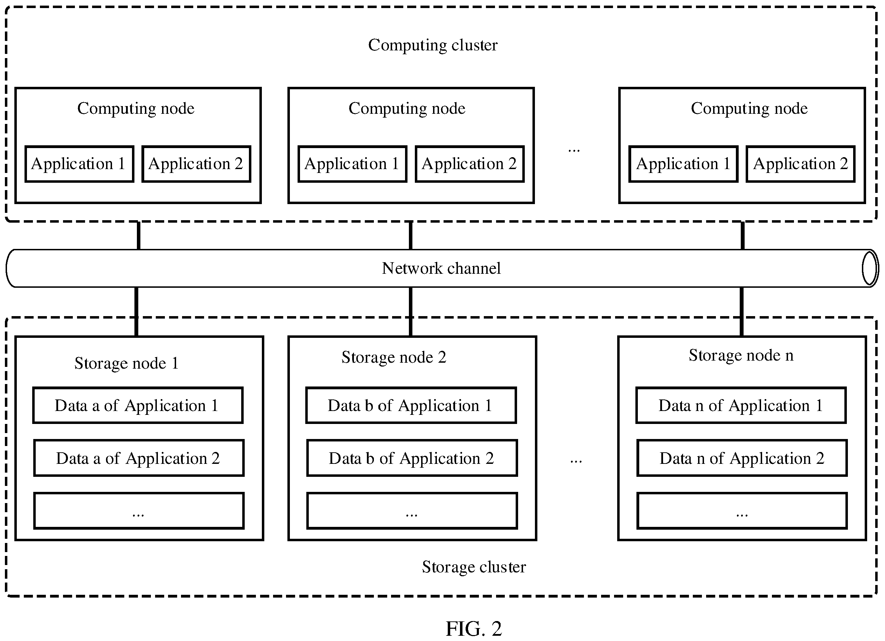

The foregoing describes an overall architecture of the distributed storage system. The following briefly describes distribution of data stored in the distributed storage system. Optionally, a dataset of each application is separately divided by using a sharding (sharding) mechanism or in another division manner, so that a dataset of a same application is split into a plurality of pieces of data, and the plurality of pieces of data are respectively distributed on different storage nodes. For example, each computing node processes one piece of data in an application dataset, and each storage node stores one piece of data in the application dataset, to ensure load balancing between the computing node and the storage node. For example, FIG. 2 is a schematic diagram of application data distribution. A dataset of an application 1 and a dataset of an application 2 are respectively distributed on a storage node 1 and a storage node 2 to a storage node n. The dataset of the application 1 is divided into n pieces of data, and the n pieces of data include data a of the application 1 and data b of the application 1 to data n of the application 1. The data a is distributed on the storage node 1, the data b is distributed on the storage node 2, and the data n is distributed on the storage node n. Data distribution of the application 2 is similar to the data distribution of the application 1. In addition, the storage cluster 120 may perform data redundancy protection in a multi-copy or erasure code (erasure code, EC) manner. In this way, application data is still available when some storage nodes fail, so that high availability of data is ensured.

Application scenario 2: A scenario of a centralized storage device.

For example, the centralized storage device is a storage array. The centralized storage device includes one or more controllers and one or more hard disks. The controller in the storage device is alternatively referred to as a storage controller. The centralized storage device is connected to a host through a wired network or a wireless network.

In the two application scenarios described above, the network channel between the computing cluster 110 and the storage cluster 120 or a network channel between the centralized storage device and the host is limited by factors such as costs and distances, and has disadvantages such as relatively low network bandwidth and a high delay. Therefore, for a data-intensive application such as an OLAP application or a big data analysis application, a network channel between a computing device and a storage device in which the application is located becomes one of main performance bottlenecks. In view of this, how to reduce or avoid performance overheads caused by transmitting data through a network channel between a computing side and a storage side, and improve data processing efficiency in an application has become an urgent requirement that needs to be met in the foregoing application scenario.

The foregoing describes an application scenario and a requirement in the application scenario by using an example. The following specifically describes the storage device provided in this embodiment and a method performed by the storage device. In the foregoing application scenario, a requirement for existence of the foregoing application scenario can be met by using the storage device and the method provided in this embodiment. Specifically, a data processing task is handed over to a storage node, so that a data processing process is moved from a computing node in the computing cluster 110 to a storage node in the storage cluster 120. Because the storage node can access locally stored data and locally process the locally stored data, there is no need to request remotely stored data through a network channel. In this way, a performance bottleneck caused by transmitting data through the network channel between the computing cluster 110 and the storage cluster 120 is avoided. In addition, the following embodiment may be used as a general-purpose near data computing system to support execution of data processing tasks generated by various applications such as a database application, a big data application, and an Al application, to improve flexibility of near data computing. In addition, the data processing task is divided into a plurality of subtasks, and each subtask is further pushed down to a solid state drive (solid state drive, SSD) or a dual-inline-memory-module (Dual-Inline-Memory-Modules, DIMM), a graphics processing unit (English: Graphics Processing Unit, GPU for short), a neural-network processing unit (neural-network processing units, NPU), or a dedicated data processing unit (Data Processing Unit, DPU). Each processor is separately scheduled to execute a subtask, to implement task decomposition and scheduling. Each subtask can be scheduled, based on a computing feature of the subtask and a requirement, to a most proper processor for execution. In this way, a heterogeneous computing resource of the storage device is fully utilized, and data processing efficiency is maximized.

The following describes an internal structure of the storage device with reference to FIG. 1 and FIG. 3.

An embodiment of this application provides a storage device. For example, the storage device is a storage node in a distributed storage system, for example, the storage node 120a, the storage node 120b, or the storage node 120c in FIG. 1. For another example, the storage device is a centralized storage device. The storage device includes a plurality of processors, a network interface card, and a storage medium (Storage Media). The plurality of processors include a central processing unit and a plurality of dedicated processors.

The central processing unit is configured to: obtain a data processing task, perform division to obtain subtasks, and schedule each dedicated processor. For example, as shown in FIG. 1, the storage node 120a is an example for describing the storage device, and the central processing unit 121 on the storage node 120a is an example for describing the central processing unit in the storage device.

The dedicated processor is any processor other than the central processing unit. The dedicated processor has computing power, and can participate in execution of a subtask by using the computing power of the dedicated processor. For example, as shown in FIG. 1, a GPU 122 and an NPU 123 on the storage node 120a are examples for describing the dedicated processors in the storage device. In addition, as shown in FIG. 3, a DPU 1272 in a DIMM 127 on a storage node and a DPU 1282 in an SSD 128 on the storage node are also examples for describing dedicated processors in a storage device. A specific type of the dedicated processor includes a plurality of cases. The following uses case 1 and case 2 as examples to describe the dedicated processor.

Case 1: The dedicated processor is an independent chip.

For example, as shown in FIG. 1 or FIG. 3, the dedicated processor is a chip that can work independently, such as a GPU or an NPU.

Case 2: The dedicated processor is a processor in any element that is included in the storage device.

In case 2, the dedicated processor may be integrated with another element of the storage device. For example, as shown in FIG. 1, the storage device includes a hard disk, and the dedicated processor is a controller (SSD controller) of the hard disk. For example, when the hard disk is an SSD, the SSD includes a processor, and the dedicated processor may be a processor of the SSD. For example, as shown in FIG. 3, an SSD includes a DPU, and the dedicated processor is the DPU 1282 in the SSD 128. The SSD including a processor is alternatively referred to as a computing SSD or an intelligent SSD. In some embodiments, the storage device includes a DIMM, the DIMM includes a processor, and the dedicated processor is the processor of the DIMM. For example, as shown in FIG. 3, the DIMM 127 includes the DPU 1272, and the dedicated processor is the DPU 1272 in the DIMM 127. The DIMM including a processor is alternatively referred to as a computing DIMM or an intelligent DIMM.

In some embodiments, the dedicated processor is an application-specific integrated circuit (application-specific integrated circuit, ASIC), a programmable logic device (programmable logic device, PLD), or a combination thereof. The PLD may be a complex programmable logic device (complex programmable logic device, CPLD), a field-programmable gate array (field-programmable gate array, FPGA), a generic array logic (generic array logic, GAL), or any combination thereof. The dedicated processor may be a single-core processor or a multi-core processor.

In some embodiments, the plurality of dedicated processors included in the storage device are heterogeneous processors. Optionally, the plurality of dedicated processors have different hardware architectures. Optionally, the plurality of dedicated processors support different instruction sets. For example, one dedicated processor included in the storage device supports an X86 instruction set, and another dedicated processor included in the storage device supports an ARM instruction set. For example, the storage device includes a CPU, a GPU, an NPU, a DIMM, and an SSD. In this example, the CPU, the GPU, the NPU, a DPU in the DIMM, and a DPU in the SSD are examples for describing five types of heterogeneous processors. For a central processing unit, a plurality of heterogeneous dedicated processors may form a heterogeneous computing resource pool, and the central processing unit may schedule a resource in the heterogeneous computing resource pool to execute a task.

The central processing unit communicates with the dedicated processor in a plurality of manners. In some embodiments, the central processing unit is connected to the dedicated processor through a high-speed Internet network, and the central processing unit communicates with the dedicated processor through the high-speed Internet network. The high-speed Internet network is, for example, a peripheral component interconnect express, PCIe (peripheral component interconnect express, PCIe) bus, a memory fabric, a high-speed Ethernet, an HCCS, an InfiniBand (InfiniBand, IB), or a fibre channel (Fibre Channel, FC).

The network interface card is configured to provide a data communication function. For example, as shown in FIG. 1, a network interface card in the storage device is a network interface card 125 on the storage node 120a.

The storage medium is used to store data. For example, as shown in FIG. 1, the storage medium is a hard disk 124 on the storage node 120a. The hard disk 124 is configured to store data. The hard disk 124 is, for example, a solid state drive (solid state drive, SSD for short) or a hard disk drive (hard disk drive, HDD for short). For example, as shown in FIG. 3, the hard disk is the SSD 128. The SSD 128 includes at least one flash memory chip 1281, and the flash memory chip 1281 is configured to persistently store data. For example, as shown in FIG. 3, the storage medium may alternatively be a DRAM chip 1271 in the DIM 127.

In some embodiments, the storage device further includes a storage interface (Storage Interface) 126. The storage interface 126 is configured to provide a data access interface for an upper layer (for example, a processor of the storage device and an application of the computing node). For example, the storage interface 126 is a file system interface or a key-value (Key-Value, KV) interface.

The foregoing describes an internal structure of the storage device from a perspective of hardware. The following describes a logical function architecture inside the storage device from a perspective of software.

As shown in FIG. 3, the storage node includes an NDP execution engine (NDP Execution Engine) 20, and the NDP execution engine 20 is software on the storage node. The NDP execution engine 20 runs in a central processing unit of the storage node. For example, the NDP execution engine 20 runs in a controller of the storage node.

The NDP execution engine 20 includes a parser (Parser) 201 and an executor (Executor) 202. The parser 201 is configured to parse definition information 203 that describes an NDP task, to generate a topology diagram 204. The executor 202 is configured to: separately schedule, based on the topology diagram 204, each dedicated processor and the central processing unit to execute a subtask. For example, in FIG. 3, the executor 202 schedules the CPU to execute a subtask a, schedules the GPU to execute a subtask c, schedules the NPU to execute a subtask b, schedules the DPU in the DIMM to execute a subtask e, and schedules the DPU in the SSD to execute a subtask d. In some embodiments, both the parser 201 and the executor 202 are software. For example, the parser 201 and the executor 202 are function modules generated after the central processing unit of the storage node reads program code.

The foregoing describes the system architecture. The following describes, by using a method 300 and a method 400, an example of a method process for executing a task based on the system architecture provided above.

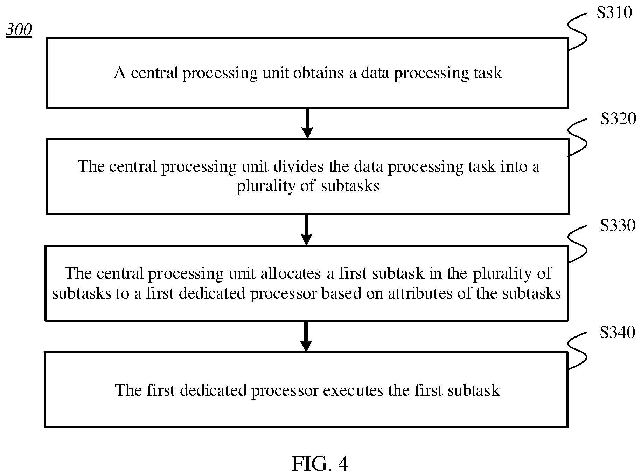

FIG. 4 is a flowchart of a task execution method 300 according to an embodiment of this application.

The method 300 is performed by a storage device. Optionally, the method 300 is performed by a storage node in a distributed storage system. For example, the method 300 is performed by the storage node 120a, the storage node 120b, and the storage node 120c in the system architecture shown in FIG. 1. Optionally, the method 300 is performed by a centralized storage device.

Optionally, data processed in the method 300 is data generated and maintained by an application of the host in the system architecture shown in FIG. 1. For example, the application of the host generates a data processing task based on data that needs to be processed by the application of the host, and uses the data processing task as input of the storage device, to trigger the storage device to perform the following step S310 to step S340.

For example, the method 300 includes S310 to S340.

S310: A central processing unit obtains a data processing task.

The data processing task is a task of processing data stored in the storage device. Optionally, the data processing task is an NDP task. There are a plurality of types of data processing tasks. For example, the data processing task is a multi-table union query task generated by an OLAP application, a model training task generated by an AI application, a high-performance computing task generated by an HPC application, a big data analysis task such as a physical experimental data analysis task or a meteorological data analysis task that is generated by a big data analysis application, a transaction processing task generated by an OLTP application, or the like.

There are a plurality of implementations in which the central processing unit obtains the data processing task. In some embodiments, the data processing task comes from a computing device. Specifically, the computing device generates the data processing task and sends the data processing task to the storage device, and the central processing unit of the storage device receives the data processing task. In this manner, the data processing task is pushed down from the computing device to the storage device for execution, so that near data processing is implemented. For example, as shown in FIG. 3, an application in a host generates an NDP task, and the application sends a task pushdown request to an NDP coordinator, where the task pushdown request carries the NDP task and is used to request to send the task to the storage device. The NDP coordinator sends the NDP task to the storage device in response to the task pushdown request, so that the storage device obtains the NDP task.

In some embodiments, to-be-processed data in the data processing task is stored in the storage device. For example, the computing device determines, based on a home location of the data, a storage device in which the data is located, and sends the data processing task to the storage device in which the data is located, so that the storage device schedules a local processor nearby to process the local data.

There are a plurality of implementations in which the computing device determines the storage device in which the data is located. For example, when the data is a file, the storage device in which the file is located is determined by using an ID of the file. For another example, when the data is a key-value pair, the storage device in which the data is located is determined by using a key (key). In some embodiments, a process of determining the storage device in which the data is located relates to interaction between the computing device and a data management apparatus. Specifically, the computing device sends a query request to the data management apparatus, where the query request includes the ID of the file or the key. In response to the query request, the data management apparatus queries, based on the ID of the file or the key, a node in which the data is located in the storage cluster, and sends a query response to the computing device, where the query response includes an identifier of the storage device. The computing device receives the query response, and determines the storage device in which the data is located.

Optionally, the data processing task is described in a declarative language. The declarative language is a programming paradigm that is opposite to imperative programming. The declarative language describes an objective of the data processing task. In other words, the declarative language indicates an operation performed by the storage device, but does not explicitly indicate how the operation should be specifically performed. For example, the data processing task is an NDP task. A developer designs a declarative language for describing the NDP task, and calls the declarative language as an NDP description language. An application may define, in the NDP description language, an NDP task that needs to be pushed down to the storage device, to obtain definition information of the NDP task. The definition information of the NDP task includes an input parameter of the NDP task, an operation that needs to be performed in the NDP task, and an output result of the NDP task. For example, an NDP task structure defined in the NDP description language is as follows:

```
            NDP Description
            {
            Output:user_buf;//Note: This line indicates that
an output result of the NDP task needs to be stored in
 user_buf.
            Input: fileID, offset, length;//This line
indicates that input parameters of the NDP task include a file ID
 (fileID), an offset address (offset), and a length (length).
            ...
            }
```

S320: The central processing unit divides the data processing task into a plurality of subtasks.

The subtask includes but is not limited to a function or a computation step. A unit for obtaining the subtask through division includes a plurality of cases. The following uses Manner 1 to Manner 2 as examples for description. Manner 1: A function is used as a minimum unit for obtaining the subtask through division.

For example, the central processing unit divides the data processing task into a plurality of functions. One subtask is one function; or one subtask includes a plurality of functions.

Manner 2: A computation step is used as a minimum unit for obtaining the subtask through division.

For example, the central processing unit divides the data processing task into a plurality of functions, and divides each function into a plurality of computation steps. One subtask is one computation step; or one subtask includes a plurality of computation steps. Because the data processing task is decomposed into functions and further decomposed into computation steps, layer-by-layer decomposition of the task is implemented, so that a granularity of the subtask is more refined. This helps improve flexibility of scheduling the subtasks.

In some embodiments, the subtask is obtained through division according to a computing mode. Specifically, the central processing unit divides the data processing task into a plurality of subtasks according to computing modes of functions or computation steps that are included in the data processing task, where each subtask has a same computing mode. For example, the data processing task includes a function A and a function B. The function A is complex, and includes a plurality of computing modes. However, the function B is simple, and has only one computing mode. In this example, the central processing unit splits the function A into a plurality of computation steps, where each computation step has a computing mode. The central processing unit uses each computation step of the function A as a subtask, and uses the function B as a subtask. Because the subtask is obtained through division according to the computing mode, it is convenient to allocate a proper dedicated processor to the subtask according to the computing mode.

In some embodiments, the subtask is obtained through division according to definition information of a function. Specifically, the central processing unit divides the data processing task into a plurality of subtasks according to definition information of each function in the data processing task. For example, when writing a function, a developer indicates, in the function, each computation step included in the function. For example, keywords are respectively added to a code line A and a code line B in the function, to indicate that program code between the code line A and the code line B corresponds to a separate computation step. The computation step may be scheduled to a dedicated processor. The central processing unit separates out the program code between the code line A and the code line B according to the definition information of the function, and uses the program code as a subtask.

S330: The central processing unit allocates a first subtask in the plurality of subtasks to a first dedicated processor based on attributes of the subtasks.

S340: The first dedicated processor executes the first subtask.

This embodiment relates to how the central processing unit allocates the first subtask to the first dedicated processor. A process in which the central processing unit allocates another subtask to another dedicated processor is similar. The first subtask is one of the plurality of subtasks. The first dedicated processor is one of the plurality of dedicated processors. For example, the first dedicated processor is a GPU, an NPU, a DPU in a DIMM, or a DPU in an SSD.

It should be understood that, in this embodiment, that only the first subtask is allocated to the first dedicated processor is not limited. Optionally, the central processing unit further allocates another subtask other than the first subtask to the first dedicated processor.

It should be understood that, in this embodiment, that each subtask needs to be allocated to a dedicated processor is not limited. In some embodiments, the central processing unit allocates some subtasks to the central processing unit for execution. For example, the central processing unit selects a second subtask from the plurality of subtasks, and executes the second subtask.

In some embodiments, the central processing unit allocates different subtasks in the plurality of subtasks to different dedicated processors, to schedule the different dedicated processors to respectively execute the different subtasks. For example, the plurality of subtasks obtained through division include a subtask a, a subtask b, a subtask c, and a subtask d. The central processing unit allocates the subtask a to the NPU, allocates the subtask b to the GPU, allocates the subtask c to the DPU in the DIMM, and allocates the subtask d to the DPU in the SSD.

In some embodiments, quantities of subtasks allocated by the central processing unit to different dedicated processors are the same. For example, the central processing unit evenly allocates, to each dedicated processor, all the subtasks obtained through division.

In some other embodiments, quantities of subtasks allocated by the central processing unit to different dedicated processors are different. For example, with reference to current computing power of each dedicated processor, the central processing unit allocates more subtasks to a dedicated processor having idle computing power, and allocates fewer subtasks to a dedicated processor having insufficient computing power, or does not allocate a subtask to a dedicated processor having insufficient computing power. For example, the central processing unit determines a computing resource of the first dedicated processor, and determines whether the computing resource of the first dedicated processor is less than a set threshold. If the computing resource of the first dedicated processor is greater than the set threshold, the central processing unit determines that the first dedicated processor has idle computing power, and the central processing unit allocates a first quantity of subtasks to the first dedicated processor. Alternatively, if the computing resource of the first dedicated processor is less than the set threshold, the central processing unit determines that the second dedicated processor has insufficient computing power, and the central processing unit does not allocate a subtask to the first dedicated processor, or allocates subtasks whose quantity is less than the first quantity to the first dedicated processor.

In this embodiment, that the first subtask is executed only by the first dedicated processor is not limited. In some embodiments, the first dedicated processor undertakes all calculation amounts of the first subtask, and performs all steps of the first subtask. In some other embodiments, the first dedicated processor and the central processing unit collaboratively participate in calculation in the first subtask. For example, the first dedicated processor performs some steps of the first subtask, and the central processing unit performs the other steps of the first subtask. For example, in a process of executing the first subtask, the first dedicated processor monitors a remaining status of the computing resource in real time. When determining that the first dedicated processor has insufficient computing power, the first dedicated processor sends an obtained computation result and a remaining part that is not executed in the first subtask to the central processing unit. The central processing unit continues to execute the remaining part of the first subtask based on the computation result. In some other embodiments, the first dedicated processor does not perform calculation collaboratively with the central processing unit, but performs calculation collaboratively with another dedicated processor.

In some embodiments, the plurality of dedicated processors included in the storage device respectively have corresponding features, and are good at executing different tasks. In view of this, the central processing unit may allocate, with reference to the feature of the dedicated processor, a task that is suitable for being executed by the dedicated processor to the dedicated processor, so that performance advantages of each dedicated processor are fully utilized. The following uses examples (1) to (5) to describe how to allocate a subtask to a dedicated processor with reference to a specific feature of the dedicated processor.

### (1) A subtask suitable for being allocated to the GPU.

The GPU is a type of single instruction multiple data (Single Instruction Multiple Data, SIMD) processor. A GPU architecture includes thousands of simple processing cores. The GPU can perform a large amount of same calculation when the thousands of cores work at the same time. In addition, each processing core of the GPU is suitable for performing calculation, but not suitable for performing control.

When this feature of the GPU is considered, if a subtask requires simple calculation and a single mode, and the subtask includes a large amount of such simple and single calculation, the task may be allocated to the GPU, to schedule the GPU to execute a task that has a simple computing mode and a large amount of concurrent data.

For example, performing matrix multiplication calculation is a subtask that has a simple computing mode and a large amount of concurrent data. Specifically, the matrix multiplication calculation includes a large amount of vector multiplication calculation. The vector multiplication calculation is a simple operation. The vector multiplication calculation specifically includes calculation of multiplying a row and a column and then adding obtained products. When this attribute of a vector multiplication calculation task is considered, in some embodiments, a subtask of the matrix multiplication calculation is allocated to the GPU. In a process in which the GPU executes the subtask of the matrix multiplication calculation, each processing core of the GPU separately performs the vector multiplication calculation. Thousands of processing cores in the GPU simultaneously performs the vector multiplication calculation, so that execution of the entire vector multiplication calculation subtask is accelerated. This helps improve efficiency of executing the vector multiplication calculation subtask.

It should be understood that the matrix multiplication calculation is an example for describing a subtask suitable for being allocated to the GPU. The GPU is also suitable for executing a subtask other than the matrix multiplication calculation. For example, convolution calculation in a neural network is also suitable for being performed by using the GPU, and the GPU may be scheduled to execute a convolution calculation subtask.

### (2) A subtask suitable for being allocated to the NPU.

The NPU is specially designed for Al. The NPU includes modules required for AI computing, such as multiplication and addition, activation function, two-dimensional data calculation, and decompression. When this attribute of the NPU is considered, in some embodiments, a neural network calculation task (for example, an image recognition task) is allocated to the NPU. The NPU can accelerate the neural network calculation task by using a module included in the NPU.

### (3) A subtask suitable for being allocated to the DPU.

The DPU is a programmable electronic component, and is used to process data. The DPU has universality and programmability of the CPU, but the DPU is more dedicated than the CPU. The DPU can run efficiently on a network data packet, a storage request, or an analysis request. In addition, the DPU has a higher degree of parallelism than the CPU (that is, the DPU can process a large quantity of concurrent requests). When this feature of the DPU is considered, in some embodiments, the DPU is scheduled to provide a data offloading service for a global memory pool. For example, an address index, address query, a partition function, and operations such as filtering and scanning data are allocated to the DPU.

### (4) A subtask suitable for being allocated to a processor of the DIMM.

For example, the DIMM includes the DPU and a DRAM chip (DRAM chips). The DPU can quickly access the DRAM and process data stored in the DRAM, to complete a task nearby. When this feature of the DIMM is considered, in some embodiments, when data that needs to be processed in a task is located in the DRAM in the DIMM, because the DPU and the DRAM are integrated in the same DIMM, the DPU has an advantage of being closest to the data or having highest data affinity. Accordingly, the task can be allocated to the DPU of the DIMM. The DPU in the DIMM is scheduled to process data stored in the DIMM, so that processing in memory (Processing in Memory) or near memory computing (Near Memory Computing) can be implemented, and data is prevented from being transmitted by using a memory bus. In this way, task execution can be accelerated, and task execution efficiency is improved. In addition, in some embodiments, the DPU in the DIMM is scheduled to execute a task having irregular memory access and large memory access traffic, so that the performance advantage that the DPU accesses the DRAM is used to reduce time overheads caused by accessing the memory. In addition, in some embodiments, the DPU in the DIMM is a processor dedicated to performing a specific operation, and can only complete fixed types of computation. In this case, the DPU of the DIMM is scheduled to perform tasks corresponding to the fixed types of computation.

It should be understood that the foregoing is an example to describe a case in which the processor included in the DIMM is the DPU. When the processor of the DIMM is not the DPU but a processor of another type other than the DPU, a same policy may be used to allocate a task to the processor of another type of the DIMM.

### (5) A subtask suitable for being allocated to a processor of the SSD.

For example, the SSD includes the DPU and a flash chip (Flash chip). The DPU in the SSD can quickly access the flash chip and process data stored in the flash chip, to complete a task nearby. When this feature of the SSD is considered, in some embodiments, when to-be-processed data in a task is located in the flash memory chip in the SSD, the DPU in the SSD may be scheduled to execute the task. The DPU in the SSD is scheduled to process the data stored in the SSD, so that a high bandwidth inside the SSD can be fully utilized. In addition, when data is separately located on a plurality of SSDs, the plurality of SSDs may be scheduled to execute tasks in parallel, to accelerate task execution by using a concurrent processing capability of the plurality of SSDs. Furthermore, in some embodiments, the DPU in the SSD is scheduled to perform a task having a simple computing mode and a significantly reduced amount of output data, such as a filtering operation. In addition, in some embodiments, the DPU in the SSD is a processor dedicated to performing a specific operation, and can only complete fixed types of computation. In this case, the DPU of the SSD is scheduled to perform tasks corresponding to the fixed types of computation.

It should be understood that the foregoing is an example to describe a case in which the processor included in the SSD is the DPU. When the processor of the SSD is not the DPU but a processor of another type other than the DPU, a same policy may be used to allocate a task to the processor of another type of the SSD.

The following uses an example to describe how to specifically schedule a dedicated processor by using Scheduling Policy 1 to Scheduling Policy 4.

Scheduling Policy 1: Scheduling is performed based on a home location of data.

Scheduling Policy 1 also means performing scheduling based on data affinity. In some embodiments, an implementation of Scheduling Policy 1 includes: the central processing unit determines an address of data related to a subtask; the central processing unit selects, from a plurality of dedicated processors based on an address of data related to a first subtask, a dedicated processor closest to the data as a first dedicated processor; and the central processing unit allocates the first subtask to the first dedicated processor closest to the data.

The address of the data is, for example, a logical address of the data or a physical address of the data. The address of the data is, for example, determined by using metadata of the data.

Optionally, when Scheduling Policy 1 is used, the central processing unit schedules a processor of a specific apparatus to execute a subtask, where the specific apparatus includes a storage medium in which the data is located. In this case, the dedicated processor closest to the data is a processor integrated with the storage medium in which the data is located. For example, if the data is located in the SSD, the central processing unit allocates the subtask to the DPU in the SSD, to schedule the DPU in the SSD to execute the subtask. If the data is located in the DIMM, the central processing unit allocates the subtask to the DPU in the DIMM, to schedule the DPU in the DIMM to execute the subtask.

Scheduling Policy 1 is used, so that the subtask is scheduled to the dedicated processor closest to the data for execution. A transmission path of data from a storage medium to a dedicated processor is shortened, so that the dedicated processor can access the data and process the data nearby. Therefore, a delay and performance overheads caused by data movement are reduced, and data processing efficiency and a data processing speed are improved.

Scheduling Policy 2: Scheduling is performed based on a computing feature of a subtask.

In some embodiments, the computing feature of the subtask includes a computing mode of the subtask and/or a concurrency amount of the subtask. An implementation of Scheduling Policy 2 includes: the central processing unit determines a computing mode and/or a concurrency amount of the subtask; the central processing unit selects, from a plurality of dedicated processors based on the computing mode and/or the concurrency amount of the subtask, a dedicated processor matching the computing mode and/or the concurrency amount, and uses the dedicated processor as a first dedicated processor; and the central processing unit allocates a first subtask to the first dedicated processor. For example, when the subtask has a simple computing mode and a large concurrency amount, the central processing unit selects the GPU, and allocates, to the GPU, the subtask which has a simple computing mode and a large concurrency amount.

In some embodiments, the computation feature of the subtask includes a type of an algorithm that is required for executing the subtask. An implementation of Scheduling Policy 2 includes: the central processing unit selects, from the plurality of dedicated processors based on the type of the algorithm that is required for executing the subtask, a dedicated processor suitable for running the algorithm of the type. For example, the subtask is to perform facial recognition. A neural network algorithm needs to be used when facial recognition is performed, and an NPU that executes the neural network algorithm is just configured for the storage device. In this case, the central processing unit selects the NPU, and schedules the NPU to perform facial recognition by using the neural network algorithm. For another example, the subtask is to perform image compression, and a dedicated chip for image compression is just configured in the storage device. In this case, the central processing unit schedules the dedicated chip to perform image compression.

Different dedicated processors are good at processing different tasks. Therefore, when Scheduling Policy 2 is used, whether a computing feature of a subtask matches a dedicated processor is considered, and the subtask is scheduled to a dedicated processor matching the computing feature of the subtask for execution, so that the dedicated processor can process a task that the dedicated processor is good at processing. In this way, a performance advantage of the dedicated processor is utilized, and data processing efficiency is improved.

Scheduling Policy 3: Scheduling is performed based on definition information of a subtask.

In some embodiments, an implementation of Scheduling Policy 3 includes: the central processing unit obtains definition information of each subtask; the central processing unit selects, from the plurality of dedicated processors included in the storage device and based on the definition information of the first subtask, a dedicated processor indicated by the definition information of the first subtask, and uses the dedicated processor as a first dedicated processor; and the central processing unit allocates the first subtask to the first dedicated processor.

The definition information of the first subtask includes an identifier of the first dedicated processor. The identifier of the first dedicated processor is, for example, a name of the first dedicated processor. For example, when the definition information of the first subtask includes "GPU", the GPU is indicated to execute the first subtask. Because the definition information includes the identifier of the first dedicated processor, the definition information can indicate that the first dedicated processor is to execute the first subtask.

In this embodiment, that the definition information of the first subtask only includes the identifier of the first dedicated processor is not limited. In some embodiments, the definition information of the first subtask further includes an identifier of another processor other than the first dedicated processor. For example, the definition information of the first subtask includes an identifier of each processor in the plurality of processors, to indicate that the plurality of processors are available for selection when the first subtask is allocated. The central processing unit selects, based on the definition information of the first subtask, the first dedicated processor from the plurality of processors indicated by the definition information.

In some embodiments, the definition information is further used to indicate a priority of each processor in the plurality of processors. The central processing unit selects, based on the priority of each processor indicated by the definition information, a highest-priority processor from the plurality of processors indicated by the definition information, and uses the highest-priority processor as the first dedicated processor. Alternatively, when a highest-priority processor indicated by the definition information has insufficient computing power, the central processing unit selects a second-highest-priority processor as the first dedicated processor.

In some embodiments, in the definition information, priorities of different processors are indicated by using an arrangement order of processor identifiers. For example, in the definition information, if the identifier of the first dedicated processor is located before an identifier of a second dedicated processor, it indicates that the first dedicated processor has a higher priority than the second dedicated processor. For example, if the definition information includes [GPU, NPU], it indicates that the GPU has a higher priority than the NPU. If the definition information includes [NPU, GPU], it indicates that the NPU has a higher priority than the GPU.

There are a plurality of implementations to obtain the definition information of the subtask. For example, a developer specifies that a dedicated processor suitable for executing the first subtask is the first dedicated processor. In a process of writing program code of the first subtask, the developer inputs the identifier of the first dedicated processor and other information, to obtain the definition information of the subtask. The definition information of the subtask is stored into the storage device. In a scheduling process, the central processing unit reads the pre-stored definition information of the first subtask.

For example, the first subtask is a function. A developer defines syntax of the function, and specifies that definition information of the function needs to include an identifier of a dedicated processor. In some embodiments, a developer compiles a set of NDP description language. The NDP description language presets some functions or computation steps for a general computing scenario, and specifies corresponding heterogeneous processors for these functions or computation steps, to perform accelerated processing by using the heterogeneous processors. When these basic functions are used, different functions are respectively scheduled to the heterogeneous processors (such as GPUs, NPUs, and DIMMs) for execution. Different application scenarios have different functions or computation steps. Therefore, the NDP description language supports extending a computing capability of an NDP by defining a new function. When defining a new function, a developer needs to specify a dataset type corresponding to the function, an input parameter type, an output parameter type, and one or more dedicated processors that are most suitable for the function.

For example, the syntax for defining a function in the NDP description language is as follows:

```
            Decl Func <a function name> of Dataset <a dataset
type name> (arg list) [a processor 1, a processor 2, ...]
 //Notes: This line is a declaration statement of the function,
and indicates the function name, the dataset type name,
 and processors that execute the function. Decl is short
for declaration (declaration). Func is short for function
 (function). arg is short for argument (argument).
            Ret <a returned type> //Notes: This line indicates
a type of an output parameter of the function. Ret is short
 for return (return).
            Begin
            < function body >
            End //Notes: Apart between Begin and End is the
function body, and the function body includes program
 code for implementing the function.
 For example, definition information of a compression function
compiled based on the foregoing syntax is as follows:
            Decl Func Compress of Dataset Table ("LZ4") [GPU, CPU]
//Notes: This line is a declaration statement of
 the compression function. The line indicates that a function
name of the compression function is Compress, a type of
 a dataset to be processed by the compression function
is Table, a type of an algorithm used to execute the compression
 function is LZ4 compression algorithm, and the GPU
and the CPU are suitable for executing the compression function,
 where the GPU is preferentially scheduled, and then the CPU is scheduled.
            Ret Table //Note: This line indicates that a
type of an output parameter of the function is a Table type.
            Begin
            ...
            End
```

When Scheduling Policy 3 is used, in one aspect, a developer can specify, in definition information, a processor that executes a subtask, so that the subtask is scheduled to a dedicated processor specified by the developer for execution, and a customization requirement of the developer is met. In another aspect, as computing power of a storage device increases and service requirements increase, when a new task needs to be executed on the storage device, an identifier of a dedicated processor is added to definition information of the new task, so that a dedicated processor to which the new task is scheduled can be indicated. In this way, difficulty in scheduling the new task is reduced, and scalability is improved.

Scheduling Policy 4: Scheduling is performed based on a dataset type corresponding to a subtask.

In some embodiments, an implementation of Scheduling Policy 4 includes: the central processing unit determines a dataset type corresponding to each subtask; the central processing unit selects, from the plurality of dedicated processors included in the storage device and based on a dataset type corresponding to a first subtask, a dedicated processor matching the dataset type, and uses the dedicated processor as a first dedicated processor; and the central processing unit allocates the first subtask to the first dedicated processor.

The dataset type includes but is not limited to a relational data table (Table, including row storage and column storage) type, an image (Image) type, a text (Text) type, and the like.

For example, the first subtask is to perform compression, and selectable processors include the GPU and the CPU. If a dataset type corresponding to compression is an image, because a processor matching an image is the GPU, the central processing unit selects the GPU, and allocates a subtask of compressing the image to the GPU.

There are a plurality of manners to determine the dataset type corresponding to the subtask. In some embodiments, the dataset type corresponding to the subtask is determined based on definition information of the subtask. The definition information of the subtask includes a name of the dataset type. Optionally, the dataset type is a type customized by a developer. When writing program code, the developer uses a declaration statement to declare the customized dataset type so that the customized dataset type is specified in the definition information of the subtask. For example, syntax for declaring the customized dataset type is as follows:
Decl Dataset <a dataset type name>.

For example, based on the foregoing syntax, a Decl Dataset Foo statement is compiled, and the statement declares a dataset type named Foo.

In addition, optionally, a binding relationship is established between each dataset and a corresponding function. For example, a binding relationship is established between a dataset of the text type and a Count function. If a dataset of the Table type requests to invoke the Count function, the invocation is invalid. If a dataset of the text type requests to invoke the Count function, the invocation is allowed. In this manner, it is ensured that a correct function can be invoked when data in a dataset is processed.

Different dedicated processors are suitable for processing different types of data. For example, a GPU is suitable for processing an image, and some dedicated codec processors are suitable for processing videos. Therefore, when Scheduling Policy 4 is used, whether a type of to-be-processed data in a subtask matches a dedicated processor is considered, and the subtask is scheduled to a dedicated processor matching a dataset type of the subtask for execution, so that the dedicated processor can process data that is suitable for the dedicated processor to process. In this way, a case in which task execution fails because the dedicated processor cannot identify and process data of a specific type is avoided, and a success rate of task execution is improved.

Several possible scheduling policies are listed above by using Scheduling Policy 1 to Scheduling Policy 4. In some embodiments, different scheduling policies have different priorities, and a central processing unit determines, based on a priority of each scheduling policy, a specific scheduling policy is to be used. For example, among the three scheduling policies: Scheduling Policy 1, Scheduling Policy 2, and Scheduling Policy 3, Scheduling Policy 1 has a highest priority, and Scheduling Policy 2 and Scheduling Policy 3 have a second highest priority. When this priority order is used, the central processing unit preferentially considers a home location of data, and then considers a computing feature of a subtask and definition information of the subtask. For example, the central processing unit first determines whether the data is located in a DIMM or an SSD. If the data is located in the DIMM or the SSD, and the DIMM or the SSD supports execution of the task, the central processing unit allocates the subtask to a processor of the DIMM or a processor of the SSD according to Scheduling Policy 1. If the data is not in the DIMM or the SSD, the central processing unit selects, according to Scheduling Policy 2 or Scheduling Policy 3, a dedicated processor based on the computing feature of the subtask or the definition information of the subtask. The central processing unit loads the data to a memory of the selected dedicated processor, and schedules the selected dedicated processor to execute the subtask.

In some embodiments, the central processing unit performs scheduling based on an execution sequence that is of a plurality of subtasks and that is recorded in a topology diagram. For example, the central processing unit indicates, based on the topology diagram, the first dedicated processor to sequentially execute the first subtask.

The topology diagram is used to indicate the plurality of subtasks and the execution sequence of different subtasks. Specifically, the topology diagram includes a plurality of nodes and at least one edge. Each of the plurality of nodes is used to represent one of the plurality of subtasks. For example, when the subtask is a function, the node includes calculation corresponding to the function, an input parameter of the function, an output parameter of the function, and a dedicated processor for executing the function. Edges are connected to nodes corresponding to different subtasks. Each edge is used to represent a dependency relationship between different subtasks. Optionally, the topology diagram is a directed acyclic graph (Directed acyclic graph, DAG). A DAG refers to a loop-less directed graph.

In some embodiments, directions of the edges in the topology diagram are used to record the execution sequence of the subtasks. For example, a first node and a second node in the topology diagram are connected by an edge, and a direction of the edge is from the first node to the second node. In other words, a start point of the edge is the first node, and an end point of the edge is the second node. In this case, a subtask corresponding to the second node is first executed, and a subtask corresponding to the first node is executed later. For example, as shown in FIG. 3, a topology diagram is a DAG 204, and subtasks represented by nodes in the DAG 204 are functions. The DAG 204 shown in FIG. 3 includes five nodes: a node a, a node b, a node c, a node d, and a node e, respectively. The node a represents a function a, the node b represents a function b, the node c represents a function c, the node d represents a function d, and the node e represents a function e. The topology diagram has four edges: an edge extending from the node a to the node c, an edge extending from the node a to the node b, an edge extending from the node a to the node d, and an edge extending from the node c to the node e, respectively. A dependency relationship and an execution sequence that are of the functions and that are recorded by the DAG 204 in FIG. 3 are as follows: The function d and the function e are first executed. The function b and the function c depend on the function e. Accordingly, the function b and the function c are executed after the function e is executed. The function a depends on the function b, the function c, and the function d. Accordingly, the function a is executed at last. According to the DAG 204, first, the central processing unit indicates the DPU in the DIMM to execute the function e, and indicates the DPU in the SSD to execute the function d. After the function e is executed, the central processing unit indicates the NPU to execute the function b, and indicates the GPU to execute the function c. After the function b, the function c, and the function d are all executed, the central processing unit executes the function a.

There are a plurality of ways to obtain the topology diagram. In some embodiments, after receiving definition information that is of a task and that is sent by a computing device, a storage device parses the definition information of the task, to generate a topology diagram. For example, as shown in FIG. 3, after receiving definition information that is of an NDP task and that is sent by the computing device, the storage device parses the definition information of the NDP task by using a parser (Parser) 201, to generate the DAG 204, so that the DAG 204 is used to represent each subtask in the NDP task. The DAG 204 output by the parser 201 is sent to an executor (Executor) 202 included in the storage device. The executor 202 sequentially schedules, based on the DAG 204, steps or functions in the NDP task to corresponding dedicated processors for execution, and controls data flow between the steps or the functions. The definition information of the task is parsed into the topology diagram and the topology diagram is used for scheduling. In this way, in one aspect, because the topology diagram records an execution sequence of the subtasks, the central processing unit does not need to recalculate the execution sequence of the subtasks, and can directly perform scheduling according to the execution sequence recorded in the topology diagram, so that a scheduling workload is reduced. In another aspect, currently, there are many topology-based scheduling optimization algorithms, and a topology-based scheduling optimization algorithm can be invoked to optimize a subtask scheduling sequence, so that an overall execution time period of a task is shortened.

In some embodiments, for any subtask in the plurality of subtasks obtained through division, after the central processing unit selects a matched dedicated processor for the subtask, the central processing unit determines whether the selected dedicated processor is programmable. If the selected dedicated processor is programmable, the central processing unit generates instructions that can be executed on the selected dedicated processor. For example, if the selected dedicated processor supports an X86 instruction set, X86 instructions are generated; or if the selected dedicated processor supports an ARM instruction set, ARM instructions are generated. The central processing unit indicates the selected dedicated processor to execute the instructions, to complete the subtask, and caches the generated instructions. When the central processing unit schedules the subtask to the dedicated processor next time, the central processing unit may invoke the pre-cached instructions to execute the subtask, so that an instruction generation process is omitted. If the selected dedicated processor is not programmable, the central processing unit invokes a corresponding hardware computing module in the dedicated processor to execute the subtask.

In some embodiments, an application deployed in the computing cluster defines the following NDP task by using the NDP description language. The NDP coordinator queries a data management apparatus (Data Scheme Service) based on a fileID, obtains a storage node to which a file corresponding to the fileID belongs, and forwards the NDP task to the storage node.

```
                 NDP Description
            {
                 Output: user_buf;
                 Input:fileID, offset, length;
                 Table obj = RD_File(fileID, offset, length);
                      user_buf = obj.decompress().filter("age > 18").count();
            }
```

The foregoing definition information of the NDP task describes three functions to be executed in the NDP task: a decompress function, a filter function, and a count function, respectively.

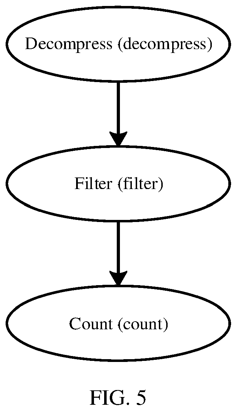

After receiving the NDP task, the storage node to which the file belongs performs description based on the definition information of the NDP task, and then parses a description language by using a parser, to generate a topology diagram shown in FIG. 5. In a scheduling process, the storage node schedules, based on a location of a dataset and a computing feature of the function, the decompress function to the nearby SSD for execution, and then schedules the filter function and the count function to the GPU for execution. After the decompress function is completed, the dataset is loaded to a memory of the GPU, to generate instructions that the filter function and the count function can be executed on the GPU, so that the functions are completed.

In some embodiments, a data reading process in the foregoing process is implemented by invoking a data reading function. The data reading function is a function defined by a system, and is used to read data from storage systems such as a file system and an object-based storage system, to return a dataset object. For example, a data reading interface includes the following:

```
            RD_File(fileID, offset, length);
                 RD_Object(key);
                 RD_Plog(PlogID, offset, length).
```

This embodiment provides a method for collaboratively processing data by using a plurality of types of processors in a storage device. A central processing unit in the storage device divides a data processing task into a plurality of subtasks, and allocates the subtasks to dedicated processors in the storage device based on attributes of the subtasks. In one aspect, during data processing, the central processing unit is responsible for task decomposition and task scheduling, and the dedicated processors are responsible for executing the subtasks, so that both computing power of the central processing unit and computing power of the dedicated processors are fully utilized. In another aspect, an attribute of a subtask is considered when the subtask is allocated, so that the subtask can be scheduled, based on the attribute of the subtask, to a proper dedicated processor for execution. Therefore, according to the method, data processing efficiency is improved.

The following describes the foregoing method 300 by using a method 400 as an example. The following method 400 is applied to a scenario of a distributed storage system. Applied data is scattered and distributed to a plurality of storage nodes. Each storage node has a plurality of types of heterogeneous processors, specifically including a CPU, a GPU, an NPU, a processor of a DIMM, and a processor of an SSD. In the following method 400, a data processing task is an NDP task, and a subtask is to execute a function. In other words, a method process described in the method 400 is about how the storage node schedules each function to a most appropriate processor of the plurality of heterogeneous processors for execution. It should be understood that, for similar steps in the method 400 and the method 300, refer to the method 300. Details are not described in the method 400.

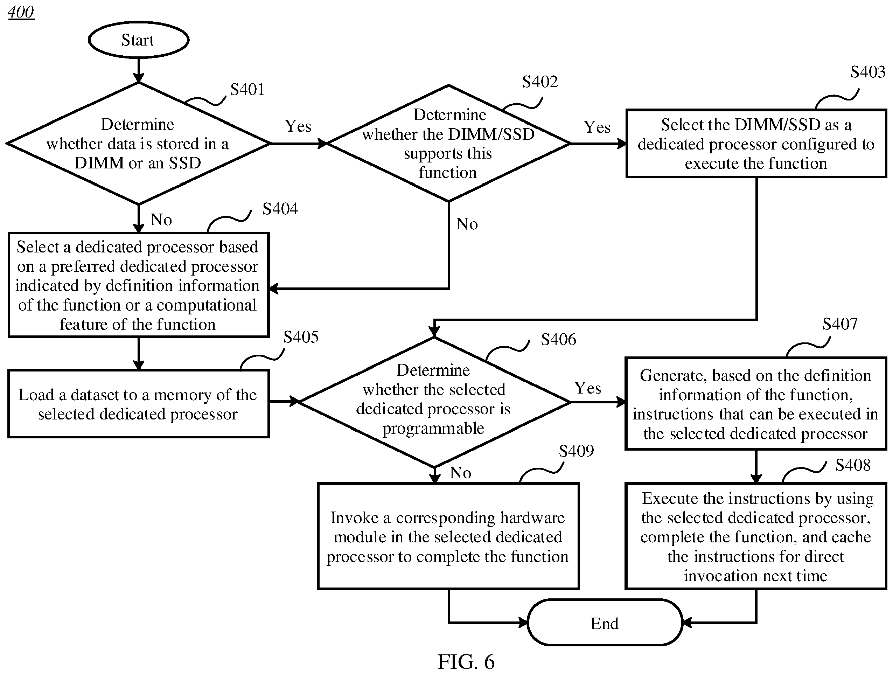

FIG. 6 is a flowchart of a task execution method 400 according to an embodiment of this application.

For example, the method 400 includes S401 to S409.

S401: Determine whether data is stored in a DIMM or an SSD. If the data is in the DIMM or the SSD, the following S402 is performed; or if the data is not in the DIMM and is not in the SSD, the following S404 is performed.

S402: Determine whether the DIMM or the SSD supports the function. If the DIMM or the SSD supports the function, the following S403 is performed; or if the data is not in the DIMM and is not in the SSD, the following S404 is performed.

S403: Select the DIMM or the SSD as a dedicated processor configured to execute the function, to perform the following S406.

S404: Select a dedicated processor based on a dedicated processor indicated by definition information of the function or a computational feature of the function, to perform the following S405.

S405: Load a dataset to a memory of the selected dedicated processor, to perform the following S406.

S406: Determine whether the selected dedicated processor is programmable. If the selected dedicated processor is programmable, the following S407 is performed; or if the selected dedicated processor is not programmable, the following S409 is performed.

S407: Generate, based on the definition information of the function, instructions that can be executed in the selected dedicated processor, to perform the following S408.

S408: Execute the instructions by using the selected dedicated processor, complete the function, and cache the instructions for direct invocation next time.

S409: Invoke a corresponding hardware module in the selected dedicated processor to complete the function.

The foregoing describes the task execution method in embodiments of this application, and the following describes a task execution apparatus in embodiments of this application. It should be understood that the task execution apparatus has any function of the storage device in the foregoing method. Optionally, a task execution apparatus 600 runs on a controller of a storage device, and the storage device includes at least one hard disk. Optionally, the task execution apparatus 600 runs on a central processing unit of the storage device.

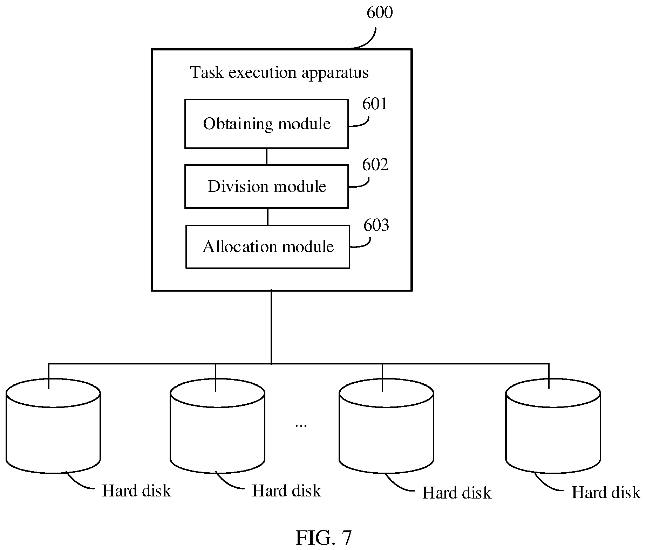

FIG. 7 is a schematic diagram of a structure of a task execution apparatus according to an embodiment of this application. As shown in FIG. 7, the task execution apparatus 600 includes: an obtaining module 601, configured to perform S310; a division module 602, configured to perform S320; and an allocation module 603, configured to perform S330.

It should be understood that the task execution apparatus 600 corresponds to the storage device in the method 300 or the method 400, and the modules in the task execution apparatus 600 and the foregoing other operations and/or functions are separately used to implement various steps and methods implemented by the storage device in the foregoing method 300 or the method 400. For specific details, refer to the foregoing method 300 or method 400. For brevity, details are not described herein again.

It should be understood that, when the task execution apparatus 600 executes a task, division of the foregoing functional modules is merely used as an example for description. In actual application, the foregoing functions may be allocated to different functional modules for implementation based on a requirement. In other words, an internal structure of the task execution apparatus is divided into different functional modules, to complete all or some of the functions described above. In addition, the task execution apparatus provided in the foregoing embodiment pertains to a same concept as the foregoing method 300 or method 400. For a specific implementation process of the task execution apparatus, refer to the foregoing method 300 or method 400. Details are not described herein again.

In some embodiments, the obtaining module 601 in the task execution apparatus is equivalent to a network interface card in the storage device, and the division module 602 and the allocation module 603 in the task execution apparatus are equivalent to the central processing unit in the storage device.

A person of ordinary skill in the art may be aware that the method steps and modules described in embodiments disclosed in this specification may be implemented by electronic hardware, computer software, or a combination thereof. To clearly describe interchangeability between hardware and software, the steps and compositions of each embodiment have been generally described in the foregoing description according to functions. Whether the functions are executed by hardware or software depends on a particular application and a design constraint condition that are of the technical solutions. A person of ordinary skill in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and module, refer to a corresponding process in the foregoing method embodiments. Details are not described herein again.

In several embodiments provided in this application, it should be understood that the disclosed system, apparatus and method may be implemented in another manner. For example, the described apparatus embodiment is merely an example. For example, the module division is merely logical function division and may be other division in an actual implementation. For example, a plurality of modules or components may be combined or integrated into another system, or some features may be ignored or may not be performed. In addition, the displayed or discussed mutual couplings or direct couplings or communication connections may be implemented through some interfaces. The indirect couplings or communication connections between the apparatuses or modules may be implemented in electronic, mechanical, or another form.

The modules described as separate parts may or may not be physically separate, and parts displayed as modules may or may not be physical modules, that is, may be located in one location, or may be distributed on a plurality of network modules. Some or all the modules may be selected based on an actual requirement to achieve the objectives of the solutions of embodiments of this application.

In addition, functional modules in embodiments of this application may be integrated into one processing module, or each of the modules may exist alone physically, or two or more modules are integrated into one module. The integrated module may be implemented in a form of hardware, or may be implemented in a form of a software function module. When the integrated module is implemented in a form of a software functional module and sold or used as an independent product, the integrated module may be stored in a computer-readable storage medium. Based on such an understanding, the technical solutions of this application essentially, or a part that contributes to a current technology, or all or a part of the technical solutions may be embodied in a form of a software product. The computer software product is stored in a storage medium, and includes several instructions for instructing a computer device (which may be a personal computer, a server, or a network device) to perform all or some of the steps of the methods in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

In this application, terms such as "first" and "second" are used to distinguish between same items or similar items having basically same functions and effects. It should be understood that there is no logical or time sequence dependency between "first" and "second", and a quantity and an execution sequence are not limited. It should also be understood that although terms such as first and second are used in the following description to describe various elements, these elements should not be limited by the terms. These terms are merely used to distinguish one element from another. For example, without departing from the scope of the various examples, a first subtask may be referred to as a second subtask, and similarly, a second subtask may be referred to as a first subtask. Both the first subtask and the second subtask may be subtasks, and may be separate and different subtasks in some cases.

The term "at least one" in this application means one or more, and the term "a plurality of' in this application means two or more. For example, a plurality of second dedicated processors means two or more second dedicated processors. It should be further understood that the term "if' may be interpreted as a meaning of "when" ("when" or "upon"), "in response to determining", or "in response to detecting". Similarly, according to the context, the phrase "if it is determined that..." or "if (a stated condition or event) is detected" may be interpreted as a meaning of "when it is determined that..." or "in response to determining..." or "when (a stated condition or event) is detected", or "in response to detecting (a stated condition or event)".

The foregoing descriptions are merely specific implementations of this application, but the protection scope of this application is not limited thereto. Any person skilled in the art can easily figure out various equivalent modifications or replacements within the technical scope disclosed in this application, and these modifications or replacements shall fall within the protection scope of this application. Therefore, the protection scope of this application shall be subject to the protection scope of the claims.

All or some of the foregoing embodiments may be implemented by using software, hardware, firmware, or any combination thereof. When software is used to implement the embodiments, all or some of the embodiments may be implemented in a form of a computer program product. The computer program product includes one or more computer program instructions. When the computer program instructions are loaded and executed on a computer, all or some of the processes or the functions according to embodiments of this application are generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer program instructions may be transmitted from a website, computer, server, or data center to another website, computer, server, or data center in a wired or wireless manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a digital video disc (digital video disc, DVD)), a semiconductor medium (for example, a solid state disk), or the like.

A person of ordinary skill in the art may understand that all or some steps for implementing the foregoing embodiments may be implemented by hardware or a program instructing relevant hardware. The program may be stored in a computer-readable storage medium. The storage medium may include a read-only memory, a magnetic disk, or an optical disc.

The foregoing descriptions are merely optional embodiments of this application, but are not intended to limit this application. Any modification, equivalent replacement, or improvement made without departing from the spirit and principle of this application shall fall within the protection scope of this application.

## Claims

1. A task execution method, wherein the method is applied to a storage device, the storage device comprises a central processing unit and a plurality of dedicated processors, and the method comprises:
obtaining, by the central processing unit, a data processing task;
dividing, by the central processing unit, the data processing task into a plurality of subtasks; and
allocating, by the central processing unit, a first subtask in the plurality of subtasks to a first dedicated processor based on attributes of the subtasks, wherein the first dedicated processor is one of the plurality of dedicated processors.

2. The method according to claim 1, wherein the attribute of the subtask comprises an address of data in the subtask, and the first dedicated processor is a dedicated processor closest to the data.

3. The method according to claim 1, wherein the attribute of the subtask comprises a calculation mode and/or a concurrency amount of the subtask, and the first dedicated processor is a dedicated processor matching the calculation mode and/or the concurrency amount.

4. The method according to claim 1, wherein the attribute of the subtask comprises definition information of the subtask, and the first dedicated processor is a dedicated processor indicated by definition information of the first subtask.

5. The method according to claim 1, wherein the attribute of the subtask comprises a dataset type corresponding to the subtask, and the first dedicated processor is a dedicated processor matching a dataset type corresponding to the first subtask.

6. The method according to claim 1, wherein an execution sequence of the plurality of subtasks is recorded in a topology diagram, and the method further comprises:
indicating, by the central processing unit based on the topology diagram, the first dedicated processor to sequentially execute the first subtask.

7. A storage device, wherein the storage device comprises a central processing unit and a plurality of dedicated processors, wherein
the central processing unit is configured to obtain a data processing task;
the central processing unit is configured to divide the data processing task into a plurality of subtasks; and
the central processing unit is further configured to allocate a first subtask in the plurality of subtasks to a first dedicated processor based on attributes of the subtasks, wherein the first dedicated processor is one of the plurality of dedicated processors.

8. The storage device according to claim 7, wherein the attribute of the subtask comprises an address of data in the subtask, and the first dedicated processor is a dedicated processor closest to the data.

9. The storage device according to claim 7, wherein the attribute of the subtask comprises a computing mode and/or a concurrency amount of the subtask, and the first dedicated processor is a dedicated processor matching the computing mode and/or the concurrency amount.

10. The storage device according to claim 7, wherein the attribute of the subtask comprises definition information of the subtask, and the first dedicated processor is a dedicated processor indicated by definition information of the first subtask.

11. The storage device according to claim 7, wherein the attribute of the subtask comprises a dataset type corresponding to the subtask, and the first dedicated processor is a dedicated processor matching a dataset type corresponding to the first subtask.

12. The storage device according to claim 7, wherein the central processing unit is further configured to: indicate, based on a topology diagram, the first dedicated processor to sequentially execute the first subtask.
